(19) Europäisches Patentamt
European Patent Office
Office européen des brevets

(11) EP 4 343 381 A1

(12) EUROPÄISCHE PATENTANMELDUNG

(43) Veröffentlichungstag:
27.03.2024 Patentblatt 2024/13

(21) Anmeldenummer: 22197735.8

(22) Anmeldetag: 26.09.2022

(51) Internationale Patentklassifikation (IPC):
$G01S\ 17/48^{(2006.01)}$   $G01S\ 17/931^{(2020.01)}$
$G01S\ 7/481^{(2006.01)}$   $A47L\ 9/00^{(2006.01)}$

(52) Gemeinsame Patentklassifikation (CPC):
G01S 17/48; A47L 9/009; G01S 7/481;
G01S 7/4815; G01S 17/931

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Vorwerk & Co. Interholding GmbH
42275 Wuppertal (DE)

(72) Erfinder:
• Mosebach, Andrej
  59425 Unna (DE)
• Bartels, Jascha
  45134 Essen (DE)
• Wallentin, Markus
  45131 Essen (DE)

(74) Vertreter: Müller, Enno et al
Rieder & Partner mbB
Patentanwälte - Rechtsanwalt
Yale-Allee 26
42329 Wuppertal (DE)

(54) **SICH SELBSTTÄTIG FORTBEWEGENDES BODENBEARBEITUNGSGERÄT MIT EINER OPTISCHEN ABSTANDSMESSEINRICHTUNG**

(57)   Die Erfindung betrifft ein sich selbsttätig fortbewegendes Bodenbearbeitungsgerät (1) mit einer optischen Abstandsmesseinrichtung (2) zur Detektion einer Distanz des Bodenbearbeitungsgerätes (1) zu einem Hindernis (3) in der Umgebung, wobei die Abstandsmesseinrichtung (2) eine erste Triangulationseinrichtung (4) mit einer ersten Lichtquelle (6), einem ersten Lichtempfänger (8) und einer dem ersten Lichtempfänger (8) zugeordneten ersten Linse (10), eine separat zu der ersten Triangulationseinrichtung (4) ausgebildete zweite Triangulationseinrichtung (5) mit einer zweiten Lichtquelle (7), einem zweiten Lichtempfänger (9) und einer dem zweiten Lichtempfänger (9) zugeordneten zweiten Linse (11), und eine Auswerteeinrichtung aufweist, wobei die der jeweiligen Triangulationseinrichtung (4, 5) zugehörige Linse (10,11) von einem Hindernis (3) in Richtung des zugeordneten Lichtempfängers (8, 9) reflektiertes Licht der Lichtquelle (6, 7) bündelt und auf einen Abbildungsort (12) auf dem Lichtempfänger (8, 9) abbildet, und wobei die Auswerteeinrichtung eingerichtet ist, anhand des Abbildungsortes (12) eine Distanz zu dem Hindernis (3) zu ermitteln. Um eine Abstandsmesseinrichtung (2) in Bezug auf die Detektion unterschiedlich entfernter Hindernisse (3) zu verbessern, wird vorgeschlagen, dass die erste Triangulationseinrichtung (4) zur Detektion eines Hindernisses (3) in einem Nahdistanzbereich zu dem Bodenbearbeitungsgerät ausgebildet ist und dass die zweite Triangulationseinrichtung (5) zur Detektion eines Hindernisses (3) in einem Ferndistanzbereich zu dem Bodenbearbeitungsgerät (1) ausgebildet ist.

Fig. 3

EP 4 343 381 A1

**Beschreibung**

**Gebiet der Technik**

Die Erfindung betrifft ein sich selbsttätig fortbewegendes Bodenbearbeitungsgerät mit einer optischen Abstandsmesseinrichtung zur Detektion einer Distanz des Bodenbearbeitungsgerätes zu einem Hindernis in der Umgebung, wobei die Abstandsmesseinrichtung eine erste Triangulationseinrichtung mit einer ersten Lichtquelle, einem ersten Lichtempfänger und einer dem ersten Lichtempfänger zugeordneten ersten Linse, eine separat zu der ersten Triangulationseinrichtung ausgebildete zweite Triangulationseinrichtung mit einer zweiten Lichtquelle, einem zweiten Lichtempfänger und einer dem zweiten Lichtempfänger zugeordneten zweiten Linse, und eine Auswerteeinrichtung aufweist, wobei die der jeweiligen Triangulationseinrichtung zugehörige Linse von einem Hindernis in Richtung des zugeordneten Lichtempfängers reflektiertes Licht der Lichtquelle bündelt und auf einen Abbildungsort auf dem Lichtempfänger abbildet, und wobei die Auswerteeinrichtung eingerichtet ist, anhand des Abbildungsortes eine Distanz zu dem Hindernis zu ermitteln.

**Stand der Technik**

Sich selbsttätig fortbewegende Bodenbearbeitungsgeräte der vorgenannten Art sind im Stand der Technik hinreichend bekannt. Diese sind autonome Bodenbearbeitungsroboter, wie beispielsweise Reinigungsgeräte, Mähgeräte, Poliergeräte, Bohnergeräte oder ähnliche. In der Gattung der Reinigungsgeräte kann des Weiteren unterschieden werden in beispielsweise Saugreinigungsgeräte und Wischreinigungsgeräte. Die sich selbsttätig fortbewegenden Bodenbearbeitungsgeräte verfügen üblicherweise über eine Navigationseinrichtung, mit welcher sich das Bodenbearbeitungsgerät in der Umgebung lokalisieren und durch die Umgebung navigieren kann. Die Abstandsmesseinrichtung dient in diesem Zusammenhang zur Detektion von Distanzen zu Hindernissen in der Umgebung, auf deren Basis dann eine Umgebungskarte erstellt wird, anhand welcher sich das Bodenbearbeitungsgerät orientieren kann.

Es ist des Weiteren bekannt, eine Abstandsmesseinrichtung eines Bodenbearbeitungsgerätes als Triangulationseinrichtung auszubilden, welche eine Lichtquelle, einen Lichtempfänger und eine dem Lichtempfänger zugeordnete Linse aufweist, die von einem Hindernis in Richtung des Lichtempfängers reflektiertes Licht bündelt. Von der Lichtquelle emittiertes Licht trifft auf das Hindernis und gelangt zumindest bezogen auf Reflexionsanteile zu dem Lichtempfänger, wobei der Lichtempfänger üblicherweise einen flächigen Chip, beispielsweise CCD-Chip oder CMOS-Chip aufweist. Die genaue Position des auf den Chip zurückreflektierten Lichtanteils gibt Aufschluss über die Entfernung zwischen dem Hindernis und dem Bodenbearbeitungsgerät. Dabei wird die Entfernung mittels Triangulation ermittelt. Solche optischen Triangulationseinrichtungen sind insbesondere für den Nahbereich ausgelegt. Für den Fernbereich erweisen sich diese als weniger geeignet, da mit zunehmender Entfernung des Hindernisses zu dem Bodenbearbeitungsgerät die Kennlinie zur Ermittlung der Distanz zunehmend flach verläuft, was die exakte Ermittlung der Distanz erschwert. Dabei ist von entscheidender Bedeutung, dass zur Detektion kurzer Distanzen, d. h. in einem Nahdistanzbereich von ca. 0,2 m bis hin zu ungefähr 5 m, spitzere Winkel zwischen Lichtquelle, Hindernis und Lichtempfänger bestehen müssen, als dies zur Detektion von Hindernissen in einem Ferndistanzbereich, ab 5 m der Fall ist. Die geometrische Anordnung der optischen Komponenten der Triangulationseinrichtung lässt sich somit nicht einerseits auf den Nahdistanzbereich und andererseits auf den Ferndistanzbereich optimieren. Eine Vergrößerung des Lichtempfängers, d. h. beispielsweise des Chips, auf welchen das rückreflektierte Licht auftrifft, würde zu einer Vergrößerung des Bauraumes der Abstandsmesseinrichtung innerhalb des Bodenbearbeitungsgerätes führen, was nicht gewünscht ist. Sofern eine Abstandsmesseinrichtung also für den Ferndistanzbereich ausgelegt werden soll, können kurze Distanzen zu einem Hindernis in einem Nahdistanzbereich nicht länger erfasst werden. Dies würde die Navigation des Bodenbearbeitungsgerätes unmöglich machen.

Aus der DE 10 2008 014 912 A1 ist ein selbsttätig verfahrbares Bodenstaub-Aufsammelgerät mit einer Hinderniserkennung bekannt, bei welcher die Lichtstrahlen in einer Empfängereinheit so beeinflusst werden, dass es nach einer Bündelung durch eine Empfängerlinse zumindest zugeordnet zu größeren realen Entfernungen zu einem Hindernis zu größeren Abständen auftreffender Lichtstrahlen auf einem lichtempfindlichen Element kommt. Dies wird durch eine zusätzlich zu der Empfängerlinse vorgesehene Korrekturlinse erreicht. Darüber hinaus wird gemäß einer weiteren Ausführung vorgeschlagen, dass die Triangulationseinrichtung in Kombination mit einem einzigen Lichtempfänger zwei separate Lichtquellen aufweist. Alternativ wird vorgeschlagen, dass einer einzigen Lichtquelle zwei separate Lichtempfänger zugeordnet werden.

Eine Unterscheidung der Signale des Nahdistanzbereiches von den Signalen des Ferndistanzbereiches wird regelmäßig durch Lichtquellen mit unterschiedlichen Wellenlängen oder entsprechende nachgeordnete Filterelemente erreicht. Sofern eine einzige Lichtquelle in Verbindung mit mehreren Lichtempfängern verwendet wird, ist es üblich, ein Lichtsignal nur dann zu senden, wenn eine Auswerteelektronik Kenntnis darüber hat, ob derzeit eine Nahdistanzmessung oder eine Ferndistanzmessung erfolgt, um dann entsprechend eine Detektion nur mit einem bestimmten Lichtempfänger vorzunehmen.

Daneben offenbart die vorgenannte DE 10 2008 014 912 A1 auch eine gattungsgemäße Ausbildung, bei welcher zwei völlig unabhängige Triangulationseinrichtungen für denselben Distanzbereich ausgebildet sind. Die Anordnung der Triangulationseinrichtungen erfolgt gleichmäßig über den Umfang der Drehplatte verteilt.

Zusammenfassung der Erfindung

Ausgehend von dem vorgenannten Stand der Technik ist es daher Aufgabe der Erfindung, ein Bodenbearbeitungsgerät mit einer Abstandsmesseinrichtung im Hinblick auf eine optimale Detektierbarkeit von Hindernissen weiterzubilden.

Zur Lösung dieser Aufgabe wird vorgeschlagen, dass die erste Triangulationseinrichtung zur Detektion eines Hindernisses in einem Nahdistanzbereich zu dem Bodenbearbeitungsgerät ausgebildet ist und dass die zweite Triangulationseinrichtung zur Detektion eines Hindernisses in einem Ferndistanzbereich zu dem Bodenbearbeitungsgerät ausgebildet ist.

Erfindungsgemäß ist nun eine Abstandsmesseinrichtung geschaffen, bei welcher vollständig separat arbeitende Triangulationseinrichtungen für einerseits den Nahdistanzbereich, und andererseits den Ferndistanzbereich ausgebildet sind. Eine erste Triangulationseinrichtung ist dabei für den Nahdistanzbereich, bevorzugt für Distanzen zu Hindernissen von weniger als ca. 5 Meter, optimiert, während eine zweite Triangulationseinrichtung für Distanzen zu Hindernissen optimiert ist, die mehr als ca. 5 Meter betragen können. Jede der Triangulationseinrichtungen, d. h. sowohl die erste Triangulationseinrichtung, als auch die zweite Triangulationseinrichtung weisen eine eigene Lichtquelle, einen eigenen Lichtempfänger und eine eigene dem Lichtempfänger zugeordnete Linse auf. Die Strahlengänge der beiden Triangulationseinrichtungen sind vollständig unabhängig voneinander. Bauelemente des Strahlengangs werden nicht miteinander geteilt. Lediglich, und dies bevorzugt, können jedoch andere Einrichtungen der Abstandsmesseinrichtung miteinander geteilt werden, beispielsweise ein Drehteller, auf welchem die beiden Triangulationseinrichtungen oder Teile dieser angeordnet sind, und/oder eine Auswerteeinrichtung, welche die Signale der beiden Triangulationseinrichtungen empfängt und daraus eine Distanz zu einem Hindernis ermittelt.

Gemäß einer ersten Ausführungsform der Erfindung wird vorgeschlagen, dass die erste Triangulationseinrichtung und die zweite Triangulationseinrichtung bezogen auf eine Fläche, auf welcher sich das Bodenbearbeitungsgerät fortbewegt, in verschiedenen Höhenebenen übereinander angeordnet sind. Gemäß dieser Ausgestaltung ist beispielsweise eine zweite Triangulationseinrichtung über einer ersten Triangulationseinrichtung angeordnet, so dass die Abstandsmesseinrichtung zwei Abstandsmessungen in unterschiedlichen Höhenebenen der Umgebung durchführen kann. Jede Abstandsmessung erfolgt dabei auf einen bestimmten Distanzbereich optimiert, nämlich zum einen mittels der ersten Triangulationseinrichtung auf einen Nahdistanzbereich optimiert, und zum anderen mittels der zweiten Triangulationseinrichtung auf einen Ferndistanzbereich optimiert. Die Ein- und Austrittsöffnungen der Lichtquellen bzw. Lichtempfänger der beiden Triangulationseinrichtungen sind bevorzugt im Wesentlichen in dieselbe radiale Richtung ausgerichtet. Dementsprechend sind diese bevorzugt direkt übereinander angeordnet, nämlich in einem gleichen Umfangsbereich der Abstandsmesseinrichtung. Die beiden Triangulationseinrichtungen können somit zum selben Zeitpunkt in gleiche Richtung messen. Alternativ ist es selbstverständlich möglich, dass die Eintritts- bzw. Austrittsöffnungen der Lichtquellen in unterschiedliche Umfangsrichtungen weisen, beispielsweise zueinander um 180 Grad rotiert sind, so dass nahezu vollständig ausgeschlossen werden kann, dass Lichtanteile des von der ersten Triangulationseinrichtung emittierten Lichtes auf den Lichtempfänger der zweiten Triangulationseinrichtung treffen bzw. umgekehrt, dass Lichtanteile der Lichtquelle der zweiten Triangulationseinrichtung auf den Lichtempfänger der ersten Triangulationseinrichtung treffen. Jede Höhenebene, d. h. Etage, der Abstandsmesseinrichtung, d. h. auch jede Triangulationseinrichtung, weist individuelle geometrische Parameter für den jeweils abzudeckenden Distanzbereich zu einem Hindernis auf. Dies betrifft den Abstand zwischen der Lichtquelle und dem Lichtempfänger, die Brennweite der dem Lichtempfänger zugeordneten Linse und den Anstellwinkel der Austrittsöffnung der Lichtquelle bezogen auf eine Gerade, welche die Austrittsöffnung der Lichtquelle mit der optischen Linsenebene der Linse des Lichtempfängers verbindet.

Gemäß einer alternativen Ausführungsform wird vorgeschlagen, dass die erste Triangulationseinrichtung und die zweite Triangulationseinrichtung bezogen auf eine Fläche, auf welcher sich das Bodenbearbeitungsgerät fortbewegt, in derselben zu der Fläche parallelen Höhenebene entlang einer gedachten, im Wesentlichen geraden Linie angeordnet sind. Gemäß dieser Ausgestaltung befinden sich die optischen Komponenten der Triangulationseinrichtungen, bzw. deren Strahlengänge, in nur einer einzigen Höhenebene des Bodenbearbeitungsgerätes, also auf nur einer Etage. Die Triangulationseinrichtungen sind des Weiteren nicht in Umfangsrichtung der Abstandsmesseinrichtung, zum Beispiel entlang einer Umfangsrichtung eines Drehtellers, auf welchem sich die Triangulationseinrichtungen befinden, angeordnet, sondern vielmehr linear entlang einer im Wesentlichen geraden Linie. Die im Wesentlichen geradlinige Anordnung der Lichtquellen und Lichtempfänger bzw. deren Linsen umfasst dabei Ausbildungen, bei welchen die Komponenten minimal in eine orthogonale Richtung zu dieser gedachten Linie verschoben sind, beispielsweise um unterschiedliche Abmessungen der Gehäuse der Lichtquellen bzw. Lichtempfänger und Linsen auszugleichen. Abweichungen zu der gedachten Linie von wenigen Millimetern bis hin zu einem oder zwei Zentimetern sind denkbar. Die Eintrittsöffnungen bzw. Austrittsöffnungen der Lichtempfänger und Lichtquellen liegen jedoch bevorzugt auf einer Geraden, um insbesondere die Berechnungen der Auswerteeinrichtung zur Distanzbestimmung zu vereinheitlichen und zu vereinfachen.

Gemäß einer bevorzugten Ausgestaltung kann vorgesehen sein, dass die erste Lichtquelle und der erste Lichtempfänger der ersten Triangulationseinrichtung entlang der Linie zwischen der zweiten Lichtquelle und dem zweiten Lichtempfänger der zweiten Triangulationseinrichtung positioniert sind. Gemäß dieser vorgeschlagenen Ineinander-Anordnung der Komponenten der beiden Triangulationseinrichtungen kann der insgesamt benötigte Bauraum der Abstandmesseinrichtung reduziert werden. Wie vorgeschlagen begrenzen die optischen Komponenten der zweiten Triangulationseinrichtung dabei die Komponenten der ersten Triangulationseinrichtung. Da die zweite Triangulationseinrichtung für den Ferndistanzbereich optimiert ist und somit ein Abstand zwischen der zweiten Lichtquelle und dem zweiten Lichtempfänger größer sein muss als ein Abstand zwischen der ersten Lichtquelle und dem ersten Lichtempfänger der ersten Triangulationseinrichtung, bietet sich diese Ausgestaltung als besonders optimal an. Auf diese Weise ergibt sich ein Modul aus den innen angeordneten Komponenten für die Detektion relativ kleiner Distanzen zu Hindernissen und ein Modul aus den außen angeordneten Komponenten für die Messung demgegenüber größerer Distanzen zu Hindernissen. Auch bei dieser Version bleibt die Bauhöhe der Abstandsmesseinrichtung insgesamt gering. Es erhöht sich lediglich die Länge der Abstandsmesseinrichtung bzw. der Durchmesser eines Drehtellers, auf welchem die Abstandsmesseinrichtung angeordnet ist.

Wie bereits erläutert, ist vorgesehen, dass die erste Lichtquelle und der erste Lichtempfänger der ersten Triangulationseinrichtung einen geringeren Abstand zueinander aufweisen als die zweite Lichtquelle und der zweite Lichtempfänger der zweiten Triangulationseinrichtung. Daraus folgt dann, dass ein Ausgangsstrahlengang der ersten Lichtquelle und ein Eingangsstrahlengang des ersten Lichtempfängers einen geringeren Winkel zueinander einschließen als ein Ausgangsstrahlengang der zweiten Lichtquelle und ein Eingangsstrahlengang des zweiten Lichtempfängers der zweiten Triangulationseinrichtung.

Des Weiteren wird vorgeschlagen, dass eine optische Achse der ersten Lichtquelle der ersten Triangulationseinrichtung einen geringeren Anstellwinkel zu einer Verbindungsgeraden zwischen der ersten Lichtquelle und dem ersten Lichtempfänger aufweist als ein Anstellwinkel einer optischen Achse der zweiten Lichtquelle der zweiten Triangulationseinrichtung zu einer Verbindungsgeraden zwischen der zweiten Lichtquelle und dem zweiten Lichtempfänger. Dies bedeutet, dass die Austrittsöffnung der ersten Lichtquelle weniger stark zu dem ersten Lichtempfänger hin gekippt ist als die Austrittsöffnung der zweiten Lichtquelle zu dem zweiten Lichtempfänger.

Bevorzugt umfasst der Nahdistanzbereich der Abstandsmesseinrichtung Distanzen des Bodenbearbeitungsgerätes zu dem Hindernis von weniger als 5 m, bevorzugt von 0,2 m bis 5 m, und umfasst der Ferndistanzbereich Distanzen des Bodenbearbeitungsgerätes zu dem Hindernis von größer als 5 m, bevorzugt von 5 m bis hin zu ungefähr 15 m. Bei im Stand der Technik bekannten Bodenbearbeitungsgeräten ist die Abstandmesseinrichtung üblicherweise noch fähig, Abstände in einem Bereich von bis zu ungefähr 5 m zu detektieren. Dies bedeutet, dass ein Bodenbearbeitungsgerät mit einer zentralen 360-Grad-Abstandsmesseinrichtung beispielsweise Messungen innerhalb einer Kreisfläche mit einem Radius von 5 m ausführen kann. Zu bearbeitende Räume dürfen daher keine dementsprechend größeren Abmessungen aufweisen. Gemäß der hier nun vorgeschlagenen Ausgestaltung erweitert sich der Ferndistanzbereich jedoch auf Distanzen bis hin zu 15 m, was bedeutet, dass ein zu bearbeitender bzw. zu vermessender Raum eine Länge von ungefähr 30 m aufweisen kann bzw. eine Fläche von ca. 900 m$^2$. Damit ist das Bodenbearbeitungsgerät befähigt, nicht nur häusliche Umgebungen zu reinigen, sondern beispielsweise auch Verkaufsräume, Lagerräume, Veranstaltungsräume und ähnliche Räume, die beispielsweise gewerblich oder industriell genutzt werden. Andererseits kann das Bodenbearbeitungsgerät gemäß der Erfindung gleichzeitig auch Distanzen zu sehr nahen Hindernissen detektieren, beispielsweise zu solchen Hindernissen, welche weniger als 20 cm von dem Bodenbearbeitungsgerät entfernt sind.

Es wird vorgeschlagen, dass Teile der Triangulationseinrichtung, zumindest der Lichtempfänger und die Linse, auf einem um eine Rotationsachse rotierbaren Drehteller angeordnet sind, wobei die Rotationsachse orthogonal zu einer Fläche, auf welcher sich das Bodenbearbeitungsgerät fortbewegt, orientiert ist. Durch den vorgeschlagenen Drehteller, auf welchem sich die Triangulationseinrichtungen insgesamt, oder zumindest der Lichtempfänger und die Linse, befinden, kann auf besonders günstige Art und Weise eine 360 Grad-Messung um das Zentrum des Bodenbearbeitungsgerätes herum vorgenommen werden. Sofern nur die Lichtempfänger und die Linsen der ersten sowie zweiten Triangulationseinrichtung auf dem Drehteller angeordnet sind, sind die Lichtquellen der Abstandsmesseinrichtung an einem feststehenden Teilbereich des Bodenbearbeitungsgerätes angeordnet, wobei die Ausgangsstrahlen der Lichtquellen so umgelenkt sind, dass diese auf Hindernisse in der Umgebung treffen und dann auf den jeweiligen, mittels des Drehtellers rotierten Lichtempfänger treffen. Sofern für jeweils sowohl den Nahdistanzbereich, als auch den Ferndistanzbereich mehr als eine Triangulationseinrichtung vorgesehen ist, genügen auch Schwenkwinkel des Drehtellers von weniger als 360 Grad. Die 360-Grad-Rotation um bevorzugt eine vertikale Rotationsachse des Bodenbearbeitungsgerätes (bei horizontaler Ausrichtung des Bodenbearbeitungsgerätes) vermeidet zudem die Entstehung toter Winkel der Abstandsmesseinrichtung. Mittels nur einer einzigen Abstandsmesseinrichtung mit erfindungsgemäß zumindest zwei Triangulationseinrichtungen kann die gesamte Umgebung des Bodenbearbeitungsgerätes auf Hindernisse überprüft werden. Die Abstandsmesseinrichtung kann mittels des rotierbaren Drehtellers gegenüber einem feststehenden Gerätegehäuse des Bodenbearbeitungsgerätes rotieren. Der Drehteller kann beispielsweise ein Teilbereich einer ein Chassis des Bodenbearbeitungsgerätes überfangenden Haube sein. Alternativ kann auch die gesamte, das Chassis übergreifende Gerätehaube die Drehplatte bilden. Alternativ zu einer kontinuierlich drehenden Drehplatte kann diese auch eine Hin- und Herbewegung, wie eine Schwenkbewegung, durchführen und dabei einen definierten Winkelbereich abscannen. Besonders bevorzugt empfiehlt sich dies bei einer Abstandsmesseinrichtung, welche für jeweils den Nahdistanzbereich und den Ferndistanzbereich mehr als eine Triangulationseinrichtung aufweist. Alternativ kann durch eine entsprechende Ausgestaltung der Antriebseinrichtung und Mechanik des Drehtellers auch ein Winkelbereich von mehr als 360 Grad abgescannt werden. Der Antrieb der Drehplatte erfolgt bevorzugt über einen Elektromotor, der in dem Bodenbearbeitungsgerät angeordnet ist. Der Elektromotor kann über ein Zahnrad- oder Zugmittelgetriebe auf die Drehplatte einwirken. Vorteilhaft erweist sich eine Ausgestaltung, bei welcher der Antrieb für die Drehplatte an einen Antrieb für Verfahrräder des Bodenbearbeitungsgerätes gekoppelt ist. So kann ein direkter Zusammenhang zwischen der Fortbewegung des Bodenbearbeitungsgerätes über eine Fläche und dem Abscannen des Umgebungsbereiches des Bodenbearbeitungsgerätes erreicht werden. Die Kopplung kann beispielsweise mittels des Zahnrad- oder Zugmittelgetriebes realisiert sein. Die Drehplatte und die darauf angeordnete Abstandsmesseinrichtung inklusive der Triangulationseinrichtungen sind bevorzugt von einer Abdeckung überdeckt. Die drehenden Teile sind bei dieser Ausgestaltung vor direktem Zugriff durch einen Nutzer und vor äußeren Umgebungseinflüssen geschützt. Um die ordnungsgemäße Funktion der Abstandsmesseinrichtung sicherzustellen, ist die Abdeckung zumindest teilweise transparent ausgebildet oder mit einem für die Detektionsstrahlung transparenten optischen Fenster ausgebildet. Es sind entsprechend Bereiche bereitgestellt, durch welche die Lichtstrahlen das Gehäuse des Bodenbearbeitungsgerätes in die Umgebung verlassen können bzw. von Hindernissen reflektierte Lichtstrahlen wieder in das Bodenbearbeitungsgerät und zu der Abstandsmesseinrichtung gelangen können. Die Höhe der Abstandsmesseinrichtung, insbesondere bei einer Ausbildung mit übereinander angeordneten Triangulationseinrichtungen, ist entsprechend höhenmäßig an den transparenten bzw. ausgesparten Abdeckungsbereich angepasst. In weiterer Ausgestaltung kann der transparente oder ausgesparte Bereich der Abdeckung auch als optische Blende und/oder optisches Filterelement ausgestaltet sein, so weiter beispielsweise durch Beschichtung eines transparenten Bereiches. Zur Erfassung eines Drehwinkels des Drehtellers zu einem feststehenden Gerätegehäuse des Bodenbearbeitungsgerätes ist ein Sensor vorgesehen, welcher einen Winkel zwischen beispielsweise einer bestimmten Stellung der Abstandsmesseinrichtung und einer Längsachse des Bodenbearbeitungsgerätes bzw. dessen Gerätegehäuse durch eine Winkelmessung erfasst. Dies ermöglicht, dass die Auswerteeinrichtung des Bodenbearbeitungsgerätes die Umgebung bei drehbarer bzw. schwenkbarer Anordnung der Abstandsmesseinrichtung kontinuierlich abscannen kann und die dabei gewonnenen Informationen einer jeweiligen Orientierung zur Umgebung zuordnen kann. So ist eine zielgerichtete Navigation des Bodenbearbeitungsgerätes möglich. Zur Ausbildung eines Winkelsensors können verschiedene Messmethoden angewendet werden, beispielsweise unter Verwendung von optischen Sensoren, Lichtschranken, Potentiometern, Hall-Sensoren oder Kontaktsensoren.

Schließlich wird vorgeschlagen, dass das Bodenbearbeitungsgerät ein für industrielle oder gewerbliche Umgebungen von mehr als 100 m², insbesondere mehr als 200 m², bis hin zu 900 m² zu bearbeitender Fläche ausgebildetes Bodenbearbeitungsgerät ist. Die Abstandmesseinrichtung ist entsprechend so ausgebildet, dass die Abstände zu Hindernissen in einer solchen Umgebung präzise gemessen werden können. Bei einer Abstandsmesseinrichtung, welche auf einem rotierenden Drehteller zentral in dem Bodenbearbeitungsgerät angeordnet ist, bedeutet dies, dass eine kreisförmige Ebene mit einem Durchmesser von bis zu 30 m abgescannt werden kann.

## Kurze Beschreibung der Zeichnungen

Im Folgenden wird die Erfindung anhand von Ausführungsbeispielen näher erläutert. Es zeigen:

Fig. 1      ein erfindungsgemäßes Bodenbearbeitungsgerät in perspektivischer Darstellung,

Fig. 2      eine Prinzipskizze eines Strahlengangs einer optischen Triangulationseinrichtung,

Fig. 3      eine Abstandsmesseinrichtung gemäß einer ersten Ausführungsform,

Fig. 4      eine Abstandsmesseinrichtung gemäß einer zweiten Ausführungsform.

## Beschreibung der Ausführungsformen

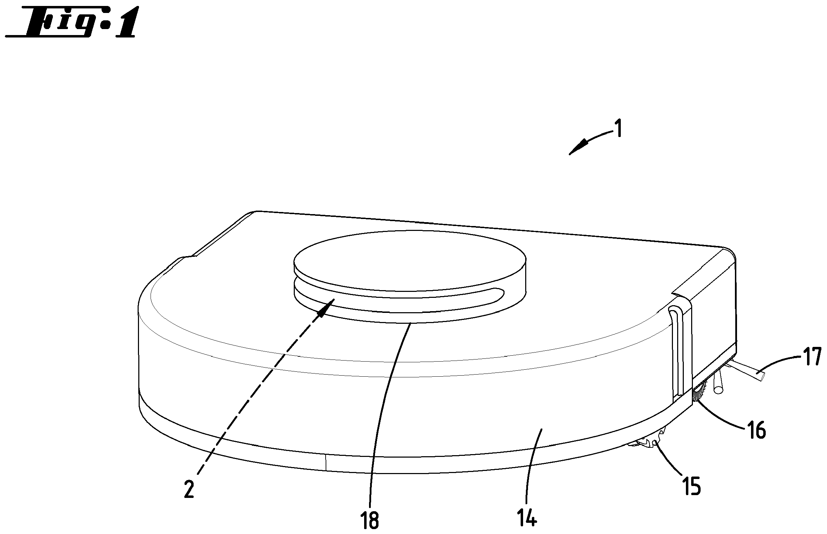

Figur 1 zeigt zunächst ein Bodenbearbeitungsgerät 1 gemäß einer möglichen Ausgestaltung. Das Bodenbearbeitungsgerät 1 ist ein sich selbsttätig fortbewegendes Bodenbearbeitungsgerät 1 mit einer elektromotorischen Antriebseinrichtung zum Antrieb von unterseitig eines Gerätegehäuses 14 angeordneten Antriebsrädern 15 des Bodenbearbeitungsgerätes 1. Das Bodenbearbeitungsgerät 1 ist hier beispielsweise als autonomes Reinigungsgerät, insbesondere Saugroboter, ausgebildet. An einer Unterseite des Gerätegehäuses 14 sind Bodenbearbeitungselemente 16, 17 angeordnet, von welchen ein erstes Bodenbearbeitungselement 16 beispielsweise eine Bürstenwalze ist, welche um eine im Wesentlichen horizontale Achse rotiert. Ein zweites Bodenbearbeitungselement 17 ist beispielsweise eine um eine im Wesentlichen vertikale Achse rotierende Seitenbürste des Bodenbearbeitungsgerätes 1, welche insbesondere geeignet ist, Übergangsbereiche zwischen einer Bodenfläche und einer Wand oder einem Hindernis zu reinigen. In dem Gerätegehäuse 14 des Bodenbearbeitungsgerätes 1 sind eine Abstandsmesseinrichtung 2 sowie eine Auswerteeinrichtung zur Auswertung der von der Abstandsmesseinrichtung 2 detektierten Informationen angeordnet. Die Abstandsmesseinrichtung 2 dient zur Detektion einer Distanz des Bodenbearbeitungsgerätes 1 zu einem Hindernis 3 in der Umgebung. Die Abstandsmesseinrichtung 2 weist hier beispielsweise zwei separate Triangulationseinrichtungen 4, 5 auf, welche nach dem Messprinzip einer optischen Triangulation Licht emittieren und von einem Hindernis 3 zurückreflektierte Lichtanteile empfangen. Obwohl dies nicht dargestellt ist, kann die Abstandsmesseinrichtung 2 auch mehr als zwei separate Triangulationseinrichtungen 4, 5 aufweisen. Zum Aussenden bzw. Empfangen von Licht sind an einer Oberseite des Gerätegehäuses 14 des Bodenbearbeitungsgerätes 1 eine oder mehrere Öffnungen 18 vorgesehen, durch welche Licht der Abstandsmesseinrichtung 2 hindurchtreten kann. Die Form des Gerätegehäuses 14 setzt sich hier beispielsweise aus einem halbkreisförmigen Abschnitt und einem daran anschließenden, rechteckförmigen Abschnitt zusammen. Die unterseitig des Gerätegehäuses 14 vorgesehenen Antriebsräder 15 sind den Bodenbearbeitungselementen 16, 17 nachgeordnet. Weiter kann, hier nicht dargestellt, ergänzend zu den Bodenbearbeitungselementen 16, 17 eine Saugmundöffnung vorgesehen sein, in welche Staub und Schmutz mittels eines Sauggebläses des Bodenbearbeitungsgerätes 1 eingesaugt werden.

Das Bodenbearbeitungsgerät 1 weist des Weiteren eine nicht weiter dargestellte Navigationseinrichtung auf, welche durch die Abstandsmesseinrichtung 2 detektierte Daten, beispielsweise in Form einer Umgebungskarte, verwendet, um das Bodenbearbeitungsgerät 1 kollisionsfrei innerhalb der Umgebung zu navigieren und sich selbst zu lokalisieren.

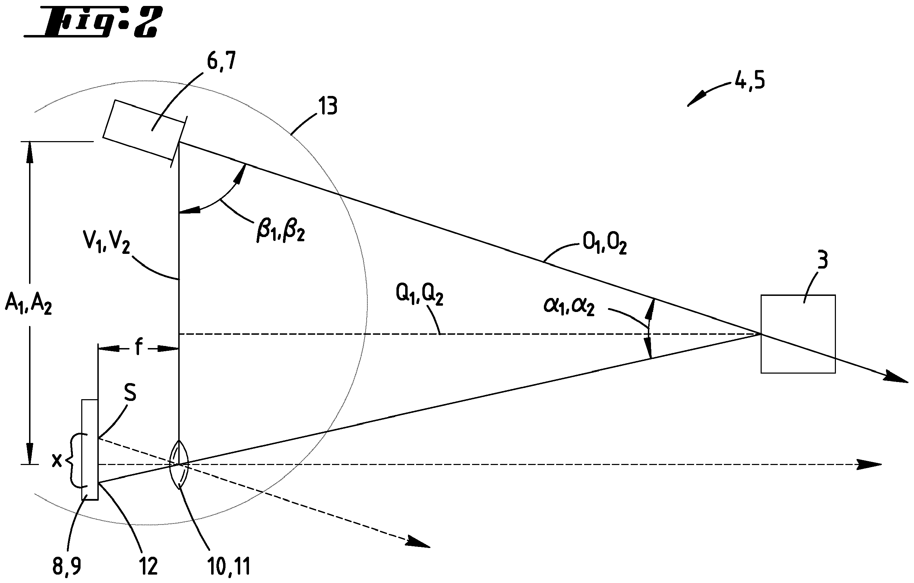

Die Abstandsmesseinrichtung 2 weist mindestens zwei Triangulationseinrichtungen 4, 5 auf. Das Messprinzip der Triangulationseinrichtung 4, 5 ist mit Bezug zu Figur 2 erläutert. Die Triangulationseinrichtung 4, 5 weist als optische Bauelemente eine Lichtquelle 6, 7, einen Lichtempfänger, 8, 9 und eine dem Lichtempfänger 8, 9 in Strahlungsrichtung vorgeschaltete Linse 10, 11 auf. Eine Austrittsöffnung der Lichtquelle 6, 7 und der Mittelpunkt der Linsenebene der Linse 10, 11 sind über eine Verbindungsgerade $V_1$, $V_2$ in einem Abstand $A_1$, $A_2$ miteinander verbunden. Die Lichtquelle 6, 7 ist mit einem definierten Anstellwinkel $\beta_1$, $\beta_2$ relativ zu der Verbindungsgeraden $V_1$, $V_2$ geneigt. Das aus der Lichtquelle 6, 7 austretende Licht propagiert entlang einer optischen Achse $O_1$, $O_2$ zu einem Hindernis 3 und wird von dort aus zu der Linse 10, 11 reflektiert und mittels der Linse 10, 11, welche eine Brennweite f aufweist, auf den Lichtempfänger 8, 9 abgebildet. Der Abstand zwischen dem reflektierenden Punkt des Hindernisses 3 und der Verbindungsgeraden $V_1$, $V_2$, bezogen auf eine senkrechte Projektion des reflektierenden Punktes auf die Verbindungsgerade $V_1$, $V_2$, ist der Messabstand $Q_1$, $Q_2$. Zwischen einem Lichtstrahl der Lichtquelle 6, 7 entlang der optischen Achse $O_1$, $O_2$ und einem von dem Hindernis 3 zu der Lichtquelle 6, 7 reflektierten Lichtstrahl besteht ein Winkel $\alpha_1$, $\alpha_2$. Das von dem Hindernis 3 reflektierte Licht wird mittels der Linse 10, 11 auf einen definierten Abbildungsort 12 des Lichtempfängers 8, 9 abgebildet, dessen Position abhängig ist von dem Messabstand $Q_1$, $Q_2$, nämlich dem Abstand des Hindernisses 3 von der Verbindungsgeraden $V_1$, $V_2$ bzw. grob gesagt dem Abstand des Hindernisses 3 zu dem Bodenbearbeitungsgerät 1 bzw. dessen Abstandsmesseinrichtung 2. Mit einer Brennweite f der Linse 10, 11, einem Abstand x des Abbildungsortes 12 relativ zu einem Schnittpunkt S des Lichtempfängers 8, 9 mit einer parallel zu dem ausgesandten Licht orientierten Linie und dem Abstand $A_1$, $A_2$ zwischen Lichtquelle 6, 7 und Linse 10, 11 ergibt sich der Messabstand $Q_1$, $Q_2$ zu

$$Q1, Q2 = \frac{f * A1, A2}{x} \text{ .}$$

Anhand dieser Formel ist erkennbar, dass zur Messung geringer Abstände $Q_1$, $Q_2$ zwischen dem Bodenbearbeitungsgerät 1 und dem Hindernis 3, die zum Beispiel während eines Dockingvorgangs des Bodenbearbeitungsgerätes 1 an einer Basisstation vorkommen, ein Produkt aus Brennweite f und dem Abstand $A_1$, $A_2$ zwischen Lichtquelle 6, 7 und Linse 10, 11 möglichst klein sein sollte. Dies führt aufgrund der geringen Abmessungen allerdings zu einer relativ hohen Messabweichung. Für große Messabstände $Q_1$, $Q_2$ empfiehlt sich entsprechend ein relativ großer Betrag des Produktes aus Brennweite f und Abstand $A_1$, $A_2$. Entsprechend besteht zur Messung von Distanzen zu weit entfernten Hindernissen 3 das Erfordernis, die Lichtquelle 6, 7 und die Linse 10, 11 besonders weit voneinander zu beabstanden bzw. alternativ oder am besten zusätzlich eine Linse 10, 11 mit großer Brennweite f zu verwenden. Dies führt entsprechend zu einem Bedarf an erhöhtem Bauraum für die Abstandsmesseinrichtung 2 innerhalb des Bodenbearbeitungsgerätes 1. Es ist mit ausreichender Messgenauigkeit also nicht möglich, sowohl sehr kleine Messabstände $Q_1$, $Q_2$, als auch sehr große Messabstände $Q_1$, $Q_2$ mit derselben Triangulationseinrichtung 4, 5 zu messen. Vielmehr empfiehlt es sich, wie die erfindungsgemäße Lösung nun vorschlägt, zwei separate Triangulationseinrichtungen 4, 5 zur Messung verschiedener Messabstände $Q_1$, $Q_2$ zu verwenden, nämlich eine erste Triangulationseinrichtung 4 für relativ kleine Messabstände $Q_1$ und eine zweite Triangulationseinrichtung 5 für relativ große Messabstände $Q_2$.

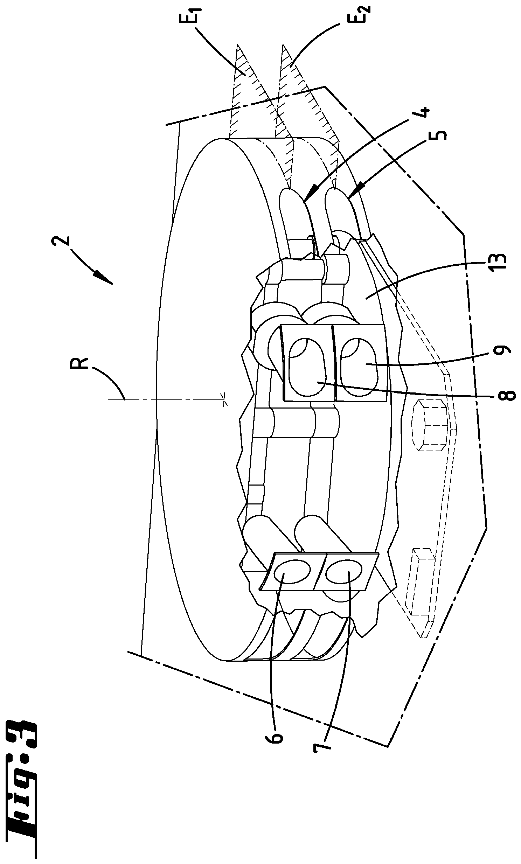

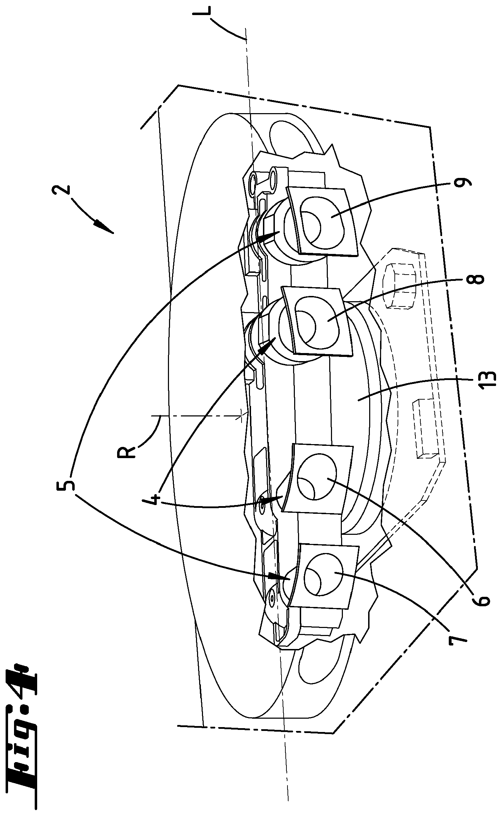

Die Figuren 3 und 4 zeigen zwei mögliche unterschiedliche Ausführungsformen für Abstandsmesseinrichtungen 2 gemäß der Erfindung. Die dargestellten Abstandsmesseinrichtungen 2 befinden sich (wie in Figur 1 dargestellt) vorzugsweise an einer Oberseite des Gerätegehäuses 14.

Die in Figur 3 dargestellte Ausführungsform zeigt eine Abstandsmesseinrichtung 2 mit einer ersten Triangulationseinrichtung 4 und einer zweiten Triangulationseinrichtung 5, welche in unterschiedlichen Höhenebenen $E_1$, $E_2$ entlang einer Rotationsachse R übereinander angeordnet sind. Die Rotationsachse R ist hier beispielsweise eine Rotationsachse R, um welche ein Drehteller 13 rotiert, auf dem die Abstandsmesseinrichtung 2 angeordnet ist. Gemäß dem dargestellten Ausführungsbeispiel ist die obere erste Triangulationseinrichtung 4 für einen Nahdistanzbereich zwischen dem Bodenbearbeitungsgerät 1 und einem zu messenden Hindernis 3 eingestellt, während die untere zweite Triangulationseinrichtung 5 zur Messung von Hindernissen 3 in einem Ferndistanzbereich optimiert ist. Der Nahdistanzbereich beinhaltet hier beispielsweise Entfernungen zu einem Hindernis 3 von 0,2 m bis 5 m, während der Ferndistanzbereich beispielsweise Messabstände $Q_1$, $Q_2$ von größer als 5 m bis hin zu 15 m umfasst. Die angegebenen Messabstände $Q_1$, $Q_2$ für einerseits die erste Triangulationseinrichtung 4 und andererseits die zweite Triangulationseinrichtung 5 sind lediglich beispielhaft. Selbstverständlich können die Elemente der Triangulationseinrichtungen 4, 5, nämlich die Lichtquellen 6, 7, die Lichtempfänger 8, 9 und die Linsen 10, 11 auch so zueinander beabstandet sein, dass andere Messabstände $Q_1$, $Q_2$ besonders optimal detektiert werden können.

Für einen sehr nahen Messbereich von weniger als 0,2 m weist das Bodenbearbeitungsgerät 1 eine zusätzliche Sensorik auf, die beispielsweise Ultraschallsensoren, bildgebende Sensoren wie Lidar- oder CCD-Sensoren oder auch einen sogenannten Bumper als Stoßsensor beinhalten kann. Wenn sich das Bodenbearbeitungsgerät 1 auf ein Hindernis 3 zubewegt, werden Abstände zunächst mittels der im Folgenden näher dargestellten Abstandsmesseinrichtung 2 in zunächst einem Ferndistanzbereich und danach in einem Nahdistanzbereich gemessen. Wenn das Bodenbearbeitungsgerät 1 anschließend eine Distanz zu einem Hindernis 3 aufweist, welche geringer ist als die untere Grenze des Nahbereichs, nämlich hier kleiner ist als 0,2 m, übernimmt die zusätzliche Sensorik für den sehr nahen Bereich die Überwachung. Im Zuge der fortschreitenden Annäherung an das Hindernis 3 wird die Geschwindigkeit des Bodenbearbeitungsgerätes 1 so angepasst, dass es nicht zu einer Kollision des Bodenbearbeitungsgerätes 1 mit dem Hindernis 3 kommt, oder zumindest nicht zu einer groben Kollision, welche Schäden an dem Bodenbearbeitungsgerät 1 und/oder dem Hindernis 3 verursachen könnte.

Gemäß Figur 3 ist die Abstandsmesseinrichtung 2 doppelstöckig ausgebildet, mit zwei übereinanderliegenden Triangulationseinrichtungen 4, 5. Die erste Lichtquelle 6 und der erste Lichtempfänger 8 sind dabei mit einem kleineren Winkel $\alpha_1$, $\alpha_2$ zueinander gestellt als die zweite Lichtquelle 7 und der zweite Lichtempfänger 9 der zweiten Triangulationseinrichtung 5. Entsprechend ist auch der Messabstand $Q_1$ der ersten Triangulationseinrichtung 4 geringer als der Messabstand $Q_2$ der zweiten Triangulationseinrichtung 5.

Figur 4 zeigt eine mögliche alternative Ausführungsform gemäß der Erfindung, bei welcher eine erste Abstandsmesseinrichtung 2 zwischen der Lichtquelle 7 und dem Lichtempfänger 9 einer zweiten Triangulationseinrichtung 5 angeordnet ist. Hierdurch ergibt sich eine lediglich eingeschossige Ausbildung der Abstandsmesseinrichtung 2. Die optischen Komponenten der beiden Triangulationseinrichtungen 4, 5 sind entlang einer gedachten geraden Linie L ausgerichtet. Die Positionen der Lichtquellen 6, 7 und Lichtempfänger 8, 9 folgen somit nicht einer Umfangskontur des Drehtellers 13, sondern der Linie L. Durch die Ineinander-Anordnung der beiden Triangulationseinrichtungen 4, 5 kann Bauraum in Bezug auf die Länge der gesamten Anordnung der Abstandsmesseinrichtung 2 entlang der Linie L erreicht werden. Die Komponenten der zweiten Triangulationseinrichtung 5, bei welcher der Abstand $A_2$ zwischen der Lichtquelle 7 und dem Lichtempfänger 9 relativ groß sein muss, um präzise in einem Ferndistanzbereich messen zu können, flankieren entsprechend von außen die erste Lichtquelle 6 und den ersten Lichtempfänger 8 der ersten Triangulationseinrichtung 4, welche zur optimalen Messung in einem Nahdistanzbereich möglichst nah beieinander stehen müssen, d. h. einen geringen Abstand $A_1$ zueinander aufweisen sollten. Durch die unterschiedlich großen Abstände $A_1$, $A_2$ der ersten Triangulationseinrichtung 4 und der zweiten Triangulationseinrichtung 5 resultiert entsprechend auch ein anderer Anstellwinkel $\beta_1$, $\beta_2$ der Lichtquelle 6, 7 relativ zu der Verbindungsgeraden $V_1$, $V_2$ bzw. ein zueinander verschiedener Winkel $\alpha_1$, $\alpha_2$ zwischen dem Einfallsstrahlengang der Lichtquelle 6, 7 und dem Ausfallstrahlengang, welcher von dem Hindernis 3 bis zu der Linse 10, 11 bzw. dem Lichtempfänger 8, 9 verläuft.

Der Messabstand $Q_1$, $Q_2$ zu einem Hindernis 3 kann anhand des Abbildungsortes 12 des von dem Hindernis 3 auf den Lichtempfänger 8, 9 reflektierten Lichtes ermittelt werden. Je nach dem Messabstand $Q_1$, $Q_2$ fällt das reflektierte Licht nach der Bündelung durch die Linse 10, 11 auf einen bestimmten Abbildungsort 12 des Lichtempfängers 8, 9. Der Lichtempfänger 8, 9 ist beispielsweise ein zweidimensional oder dreidimensional ausgebildeter Chip oder ein Array aus Fotodioden. Mit zunehmender Entfernung des Hindernisses 3 von dem Lichtempfänger 8, 9 vergrößert sich der Abstand x zwischen dem Abbildungsort 12 und einem Ort auf dem Lichtempfänger 8, 9, welcher einem Schnittpunkt S mit einer parallel zu der optischen Achse $O_1$, $O_2$ verlaufenden Gerade entspricht. Aus dem Abstand x des Abbildungsortes 12 kann die Entfernung, bzw. der Messabstand $Q_1$, $Q_2$ zu dem Hindernis 3 eindeutig nach der Beziehung

$$Q1, Q2 = \frac{f * A1, A2}{x}$$ errechnet werden.

Insgesamt ist somit erfindungsgemäß eine Abstandsmesseinrichtung 2 geschaffen, bei welcher alle Bauelemente wie Lichtquellen 6, 7, Linsen 10, 11 und Lichtempfänger 8, 9 gedoppelt sind, so dass zwei unabhängige Abstandssoriken zur Verfügung stehen, welche entweder übereinander oder nebeneinander, d. h. ineinander, angeordnet sind und einerseits Abstände zu Hindernissen 3 in einem Nahdistanzbereich und andererseits Abstände in einem Ferndistanzbereich mit gleichwertig guter Genauigkeit messen können.

Es versteht sich, dass die hier beispielhaft genannten Bereiche für Nahdistanz und Ferndistanz auch andere Werte aufweisen können, insbesondere aufgrund einer Änderung der physikalischen Parameter der Abstandsmesseinrichtung 2. Beispielsweise kann die Grenze zwischen Nahdistanzbereich und Ferndistanzbereich nicht bei 5 m liegen, sondern bei 1 m, 2 m, 3 m, 4 m, 6 m, 7 m, 8 m, 9 m, 10 m oder Bruchteilen dieser, z. B. 4,1 m, 4,2 m, 4,3 m und andere.

### Liste der Bezugszeichen

| | | | |
|---|---|---|---|
| 1 | Bodenbearbeitungsgerät | | |
| 2 | Abstandsmesseinrichtung | | |
| 3 | Hindernis | | |
| 4 | Erste Triangulationseinrichtung | | |
| 5 | Zweite Triangulationseinrichtung | $E_1$ | Höhenebene |
| 6 | Erste Lichtquelle | $E_2$ | Höhenebene |
| 7 | Zweite Lichtquelle | L | Linie |
| 8 | Erster Lichtempfänger | $A_1$ | Abstand |
| 9 | Zweiter Lichtempfänger | $A_2$ | Abstand |
| 10 | Erste Linse | $\alpha_1$ | Winkel |
| 11 | Zweite Linse | $\alpha_2$ | Winkel |
| 12 | Abbildungsort | $\beta_1$ | Anstellwinkel |
| 13 | Drehteller | $\beta_2$ | Anstellwinkel |
| 14 | Gerätegehäuse | $O_1$ | Optische Achse |
| 15 | Antriebsrad | $O_2$ | Optische Achse |
| 16 | Bodenbearbeitungselement | R | Rotationsachse |
| 17 | Bodenbearbeitungselement | f | Brennweite |
| 18 | Öffnung | $Q_1$ | Messabstand |
| | | $Q_2$ | Messabstand |
| | | $V_1$ | Verbindungsgrade |
| | | $V_2$ | Verbindungsgrade |
| | | x | Abstand |
| | | S | Schnittpunkt |

**Patentansprüche**

1. Sich selbsttätig fortbewegendes Bodenbearbeitungsgerät (1) mit einer optischen Abstandsmesseinrichtung (2) zur Detektion einer Distanz des Bodenbearbeitungsgerätes (1) zu einem Hindernis (3) in der Umgebung, wobei die Abstandsmesseinrichtung (2) eine erste Triangulationseinrichtung (4) mit einer ersten Lichtquelle (6), einem ersten Lichtempfänger (8) und einer dem ersten Lichtempfänger (8) zugeordneten ersten Linse (10), eine separat zu der ersten Triangulationseinrichtung (4) ausgebildete zweite Triangulationseinrichtung (5) mit einer zweiten Lichtquelle (7), einem zweiten Lichtempfänger (9) und einer dem zweiten Lichtempfänger (9) zugeordneten zweiten Linse (11), und eine Auswerteeinrichtung aufweist, wobei die der jeweiligen Triangulationseinrichtung (4, 5) zugehörige Linse (10, 11) von einem Hindernis (3) in Richtung des zugeordneten Lichtempfängers (8, 9) reflektiertes Licht der Lichtquelle (6, 7) bündelt und auf einen Abbildungsort (12) auf dem Lichtempfänger (8, 9) abbildet, und wobei die Auswerteeinrichtung eingerichtet ist, anhand des Abbildungsortes (12) eine Distanz zu dem Hindernis (3) zu ermitteln, **dadurch gekennzeichnet, dass** die erste Triangulationseinrichtung (4) zur Detektion eines Hindernisses (3) in einem Nahdistanzbereich zu dem Bodenbearbeitungsgerät ausgebildet ist und dass die zweite Triangulationseinrichtung (5) zur Detektion eines Hindernisses (3) in einem Ferndistanzbereich zu dem Bodenbearbeitungsgerät (1) ausgebildet ist.

2. Bodenbearbeitungsgerät (1) nach Anspruch 1, **dadurch gekennzeichnet, dass** die erste Triangulationseinrichtung (4) und die zweite Triangulationseinrichtung (5) bezogen auf eine Fläche, auf welcher sich das Bodenbearbeitungsgerät fortbewegt, in verschiedenen Höhenebenen ($E_1$, $E_2$) übereinander angeordnet sind.

3. Bodenbearbeitungsgerät nach Anspruch 1, **dadurch gekennzeichnet, dass** die erste Triangulationseinrichtung (4) und die zweite Triangulationseinrichtung (5) bezogen auf eine Fläche, auf welcher sich das Bodenbearbeitungsgerät (1) fortbewegt, in derselben zu der Fläche parallelen Höhenebene ($E_1$, $E_2$) entlang einer gedachten, im Wesentlichen geraden Linie (L) angeordnet sind.

4. Bodenbearbeitungsgerät (1) nach Anspruch 3, **dadurch gekennzeichnet, dass** die erste Lichtquelle (6) und der erste Lichtempfänger (8) der ersten Triangulationseinrichtung (4) entlang der Linie (L) zwischen der zweiten Lichtquelle (7) und dem zweiten Lichtempfänger (9) der zweiten Triangulationseinrichtung (5) positioniert sind.

5. Bodenbearbeitungsgerät (1) nach einem der vorhergehenden Ansprüche, **dadurch gekennzeichnet, dass** die erste Lichtquelle (6) und der erste Lichtempfänger (8) der ersten Triangulationseinrichtung (4) einen geringeren Abstand ($A_1$) zueinander aufweisen als die zweite Lichtquelle (7) und der zweite Lichtempfänger (9) der zweiten Triangulationseinrichtung (5) und/oder dass ein Ausgangsstrahlengang der ersten Lichtquelle (6) und ein Eingangsstrahlengang des ersten Lichtempfängers (8) einen geringeren Winkel ($\alpha 1$) zueinander einschließen als ein Ausgangsstrahlengang der zweiten Lichtquelle (7) und ein Eingangsstrahlengang des zweiten Lichtempfängers (9) der zweiten Triangulationseinrichtung (5).

6. Bodenbearbeitungsgerät (1) nach einem der vorhergehenden Ansprüche, **dadurch gekennzeichnet, dass** eine optische Achse ($O_1$) der ersten Lichtquelle (6) der ersten Triangulationseinrichtung (4) einen geringeren Anstellwinkel ($\beta_1$) zu einer Verbindungsgeraden ($V_1$) zwischen der ersten Lichtquelle (6) und dem ersten Lichtempfänger (8) aufweist als ein Anstellwinkel ($\beta_2$) einer optischen Achse ($O_2$) der zweiten Lichtquelle (7) der zweiten Triangulationseinrichtung (5) zu einer Verbindungsgeraden ($V_2$) zwischen der zweiten Lichtquelle (7) und dem zweiten Lichtempfänger (9).

7. Bodenbearbeitungsgerät (1) nach einem der vorhergehenden Ansprüche, **dadurch gekennzeichnet, dass** der Nahdistanzbereich der Abstandsmesseinrichtung (2) Distanzen des Bodenbearbeitungsgerätes (1) zu dem Hindernis (3) von weniger als 5 m, bevorzugt von 0,2 m bis 5 m, umfasst und dass der Ferndistanzbereich Distanzen des Bodenbearbeitungsgerätes (1) zu dem Hindernis (3) von größer als 5 m, bevorzugt von 5 m bis hin zu 15 m, umfasst.

8. Bodenbearbeitungsgerät (1) nach einem der vorhergehenden Ansprüche, **dadurch gekennzeichnet, dass** Teile der Triangulationseinrichtung (4, 5), zumindest der Lichtempfänger (8, 9) und die Linse (10, 11), auf einem um eine Rotationsachse (R) rotierbaren Drehteller (13) angeordnet sind, wobei die Rotationsachse (R) orthogonal zu einer Fläche, auf welcher sich das Bodenbearbeitungsgerät (1) fortbewegt, orientiert ist.

9. Bodenbearbeitungsgerät (1) nach einem der vorhergehenden Ansprüche, **dadurch gekennzeichnet, dass** das Bodenbearbeitungsgerät (1) ein für industrielle oder gewerbliche Umgebungen von mehr als 100 Quadratmeter, insbesondere mehr als 200 Quadratmeter, bis hin zu 900 Quadratmeter zu bearbeitender Fläche ausgebildetes Bodenbearbeitungsgerät (1) ist.

**Fig. 1**

EP 4 343 381 A1

**Fig.2**

Fig. 3

$E_1$

$E_2$

2

R

4

5

13

9

8

6

7

**Fig. 4**

Europäisches
Patentamt

European
Patent Office

Office européen
des brevets

**EUROPÄISCHER RECHERCHENBERICHT**

Nummer der Anmeldung

**EP 22 19 7735**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2019/146504 A1 (LEE DONG HUN [KR] ET AL) 16. Mai 2019 (2019-05-16) | 1-3,5-9 | INV.<br>G01S17/48 |
| A | * Absätze [0001], [0003], [0093], [0130], [0151]; Abbildungen 9, 11, 21 * | 4 | G01S17/931<br>G01S7/481<br>A47L9/00 |
| | ----- | | |
| Y | US 2019/146067 A1 (LEPPIN HEIKO [US] ET AL) 16. Mai 2019 (2019-05-16) | 1-3,5-9 | |
| A | * Absätze [0017], [0023]; Abbildung 1 * | 4 | |
| | ----- | | |
| A | US 2002/097404 A1 (WASLOWSKI KAI [DE] ET AL) 25. Juli 2002 (2002-07-25) | 1 | |
| | * Absätze [0019], [0020] * | | |
| | ----- | | |
| A | US 2019/293765 A1 (JEONG JI SEONG [KR] ET AL) 26. September 2019 (2019-09-26) | 1 | |
| | * Absätze [0099], [0156] * | | |
| | ----- | | |

RECHERCHIERTE
SACHGEBIETE (IPC)

G01S
A47L

Der vorliegende Recherchenbericht wurde für alle Patentansprüche erstellt

| Recherchenort | Abschlußdatum der Recherche | Prüfer |
|---|---|---|
| **München** | **3. März 2023** | **Kirscher, Jérôme** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 7735

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2023

| Im Recherchenbericht angeführtes Patentdokument | Datum der Veröffentlichung | Mitglied(er) der Patentfamilie | Datum der Veröffentlichung |
|---|---|---|---|
| US 2019146504 A1 | 16-05-2019 | EP 3437536 A1 | 06-02-2019 |
| | | KR 20170124216 A | 10-11-2017 |
| | | US 2019146504 A1 | 16-05-2019 |
| | | US 2021311477 A1 | 07-10-2021 |
| | | WO 2017191928 A1 | 09-11-2017 |
| US 2019146067 A1 | 16-05-2019 | US 2019146067 A1 | 16-05-2019 |
| | | WO 2019099490 A1 | 23-05-2019 |
| US 2002097404 A1 | 25-07-2002 | AT 360189 T | 15-05-2007 |
| | | DE 10059156 A1 | 06-06-2002 |
| | | EP 1211478 A2 | 05-06-2002 |
| | | EP 1722191 A1 | 15-11-2006 |
| | | JP 2002250623 A | 06-09-2002 |
| | | US 2002097404 A1 | 25-07-2002 |
| US 2019293765 A1 | 26-09-2019 | KR 20190014313 A | 12-02-2019 |
| | | US 2019293765 A1 | 26-09-2019 |
| | | WO 2019027100 A1 | 07-02-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008014912 A1